# EUROPEAN PATENT APPLICATION

(11) **EP 1 138 197 A2**
(43) Date of publication of application: **04.10.2001**
(21) Application number: 01302554.9
(22) Date of filing: 20.03.2001
(51) Int. Cl.: A01K 59/04

(54) **Multi-layer honey extractors**

(30) Priority: 20.03.2000 US 190631 P
(71) Applicant: Amin, Maher Omar, Mosul (IQ)
(72) Inventor: Amin, Maher Omar, Mosul (IQ)
(74) Representative: Spall, Christopher John

(57) **Abstract**

Improved honey extraction devices are provided by increasing the number of honeycomb baskets carried by centrifugal honey extraction devices. The designs of prior art extractors are altered by either incorporating multi-layer honeycomb basket assemblies into their design or providing additional honeycomb baskets substantially aligned with the honeycomb baskets pre-existing in the prior art designs. The multi-layer honeycomb basket assemblies (250A) include a first honeycomb basket (251) having an interior for retaining a honeycomb and at least a second honeycomb basket (254) having an interior for retaining a honeycomb. The second honeycomb basket (254) is substantially aligned with the first honeycomb basket (251) and a gap (252) is provided between the first (251) and second (254) honeycomb baskets. A barrier (253) is positioned between the interior of the first honeycomb basket (251) and the interior of the second honeycomb basket (254). Additional baskets may also be provided in a similar manner.

## Description

### DESCRIPTION OF THE RELATED ART

The present invention relates generally to honey extraction devices. More particularly, the present invention relates to tangential honey extractors in which honeycomb frames are tangentially distributed around the periphery thereof to effect honey extraction from the honeycomb frames through the application of centrifugal force. Through practice of the present invention, the capacity of such extractors is increased.

Tangential extractors, which are the focus of the present invention, take honey from honeycombs by means of centrifugal force. Generally, a wing support holding two or more honeycombs revolves inside a container that surrounds the revolving reel, throwing the liquid honey from the cells of the honeycomb, and leaving the empty honeycombs intact for bees to fill again. Tangential extractors can be classified into three different groups: non-reversible tangential extractors, reversible tangential extractors, and central-pivot reversing tangential extractors.

As is generally known, honeycombs have two sides from which honey can be extracted. Additionally, honeycombs are typically carried in frames, which will herein be called honeycomb frames. In a non-reversible tangential extractor, the honeycomb frames have to be turned manually in order to throw the honey out of both sides. In reversible extractors, the honeycomb frames are retained in baskets hung on hinges such that the honey from the first side of the honeycomb can be extracted and then the baskets can be swung around so that the honey can be thrown out from the other side of the honeycomb without having to take out and reverse the honeycomb. In central-pivot reversing extractors, the honeycomb frames are retained in baskets that can pivot along a center line so that honey may be extracted from the first side of the honeycomb and then the baskets may be subsequently reversed on their center lines either manually or by a suitable mechanical means to extract the honey from the other side.

Tangential extractors are very effective in extracting honey from honeycombs because the combs are held perpendicular to the direction of centrifugal force, so the throwing of honey from the cells of the combs is fast. It takes about 3 minutes to extract a load by a reversible tangential extractor. The main disadvantage of tangential extractors is their limited capacity for honeycombs. Since the invention of the first extractor, in 1865, until the present, the capacity of tangential extractors has been limited to between 2 to 12 baskets for retaining honeycombs, depending upon the size and shape of the wing support.

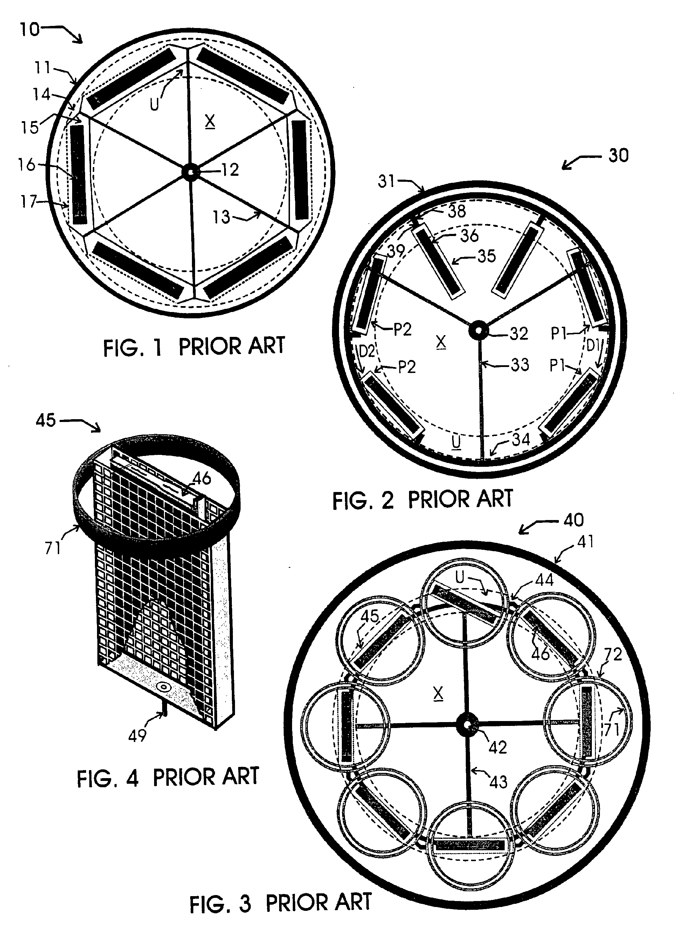

Referring now to Fig. 1, a prior art non-reversible tangential extractor is represented therein by the numeral 10. As those of ordinary skill in the art will readily appreciate, the view shown in Fig. 1, generally represents a non-reversible tangential extractor as it appears when looking downwardly into it.

In Fig.1, a tangential extractor 10 is seen to include an outer housing 11 and a drive shaft 12 which is mounted in a lower thrust bearing (not shown) firmly secured to the center of the floor of the tangential extractor 10 by any suitable means and has a top portion that mounts to a second thrust bearing (not shown) so that drive shaft 12 is supported in a vertical orientation in order that it can rotate about a vertical axis. A plurality of radially extending braces 13 are connected to drive shaft 12. A wing support 14 is mounted to braces 13, substantially coaxially with drive shaft 12. Wing support 14 includes what are to be understood herein as honeycomb baskets 15 for retaining honeycomb frames 16. Honeycomb baskets 15 include screens 17 of wing support 14, which provide a side support for honeycomb frame 16 against centrifugal forces during rotation and, at the same time, allow the honey thrown from honeycomb frames 16 to pass across screen 17 and against outer housing 11 for collection within tangential extractor 10 and subsequent drainage therefrom through a suitable outlet as known in the art. In non-reversible tangential extractors it is necessary to lift the honeycomb frames 16 by hand and reverse their positioning in honeycomb baskets 15 to extract the other side of honeycomb frames 16.

Referring now to Fig. 2, a prior art reversible tangential extractor is represented therein by the numeral 30. Fig. 2 generally represents a reversible tangential extractor as it appears when looking downwardly into it.

Reversible tangential extractor 30 of Fig. 2 includes an outer housing 31, a drive shaft 32, and a plurality of braces 33, similar in structure and function to outer housing 11, drive shaft 12, and plurality of braces 13, of the prior art non-reversible tangential extractor 10 of Fig. 1. A wing support 34 is mounted to plurality of braces 33, substantially coaxially with drive shaft 32. However, unlike non-reversible tangential extractor 10, wing support 34 of reversible tangential extractor 30 does not include honeycomb baskets as part of its design. Rather, honeycomb baskets 35 are pivotally connected to wing support 34 through top and bottom supports 38 and hinges 39. Furthermore, honeycomb baskets 35 are typically screened cages that allow honey to be extracted from both sides of honeycomb frames 36 retained in honeycomb baskets 35 as is described below.

Upon rotation of drive shaft 32, wing support 34 is likewise rotated and baskets 35 pivot on hinges 39 in the direction opposite the rotation of wing support 34 such that honeycomb frames 36 lie in a tangential position from which honey will be extracted by centrifugal forces. Thus, rotation of drive shaft 32 in direction D1 causes honeycomb baskets 35 to lie in position P1 and results in the extraction of honey from one side of the honeycomb frames 36. Upon reversing the direction of rotation of drive shaft 32 to direction D2, honeycomb baskets 35 swing on hinges 39 to position P2 such that honey may be extracted by centrifugal forces from the other side of honeycomb frames 36. Thus, reversing of the orientation of honeycomb frames 36 within honeycomb baskets 35 is unnecessary. Rather, honey is extracted from both sides of honeycomb frames 36 simply by changing the direction of rotation of drive shaft 32 (and thereby wing support 34).

Referring now to Fig. 3, a prior art central-pivot reversing tangential extractor is represented therein by the numeral 40. Fig. 3 generally represents a central-pivot reversing tangential extractor as it appears when looking downwardly into it.

Central-pivot reversing tangential extractor 40, like the prior art tangential extractors discussed herein above, includes an outer housing 41, drive shaft 42, and plurality of braces 43. However, wing support 44 carries honeycomb baskets 45 in a somewhat different manner. Particularly, wing support 44 has honeycomb baskets 45 pivotally connected thereto as generally represented in Fig. 4 at bottom hinge 49. Additionally, honeycomb baskets 45 are made stable at their tops by internal support ring 71 attached to baskets 45, which cooperate with external support ring 72 attached to wing support 44. Honeycomb baskets 45 are typically screen cages. To extract honey from honeycomb frames 46 retained in honeycomb baskets 45, drive shaft 42 is rotated to cause honey to be thrown from honeycomb frames 46. Thereafter, honeycomb baskets 45 are rotated either manually or by suitable mechanical means about hinge 49 so that honey may be extracted from the other side of honeycomb frames 46 without having to take them out of honeycomb baskets 45 to reverse their orientation.

Notably, there is only a narrow circular strip of utilized area within these prior art devices, this area being designated in Figs. 1-3, by the letter U. The remaining area within tangential extractors 10, 30, 40 is simply dead area, designated generally by the letter X. It will be generally appreciated by those of ordinary skill in the art that dead area X increases rapidly when an increasing number of honeycomb baskets 15, 35, 45 must be accommodated (i.e. when the size of the wing support and housing increases to accommodate more honeycomb frames proximate the periphery of the housing). It should be generally appreciated that, if the capacity of tangential extractors could be increased, the productivity and profitability of the extraction process would likewise increase. Thus, there exists the need in the art to increase the capacity of tangential extractors.

### SUMMARY OF PRESENT INVENTION

It has been discovered that the capacity of tangential extractors can be increased by providing a tangential extractor with multi-layer honeycomb basket assemblies.

In non-reversible tangential extractors, the multi-layer honeycomb basket assemblies consist of honeycomb baskets arranged in concentric, substantially aligned and adjacent layers. To insure that honey forced from a honeycomb frame is efficiently collected and not simply thrown into a honeycomb frame retained in an immediate adjacent honeycomb basket, a barrier is disposed between adjacent layers of baskets. In non-reversible tangential extractors, this barrier is provided by constructing the immediately adjacent outer honeycomb baskets with a solid back wall such that honey forced from the adjacent internal honeycomb basket will be thrown against the solid back wall and directed around the adjacent outer honeycomb basket and finally to the internal sidewall of the outer housing, where the honey will drip down and accumulate at the bottom of the extractor.

In reversible tangential extractors, whether of the common reversible type or central-pivot type, each honeycomb basket of the multi-layer honeycomb basket assembly must provide a screen or a structural or functional equivalent of a screen for both sides of the honeycomb frame placed therein so that, under centrifugal force, the honey can be forced from one side of the honeycomb frames and thereafter, the positioning of the multi-layer honeycomb basket assemblies can be reversed to extract the honey from the other side of the honeycomb frames. Thus, the barrier is not provided as part of a honeycomb basket, but rather is provided as a plate positioned between adjacent honeycomb baskets in a gap provided between such baskets. Realizing that, when the positioning of the multi-layer honeycomb basket assemblies is reversed, the "inner" honeycomb baskets and "outer" honeycomb baskets will switch positions while the barrier remains disposed there between, the barrier provides protection against honey being thrown into an adjacent honeycomb frame in both the original and reversed positions of the multi-layer honeycomb basket assemblies.

By increasing the number of honeycomb baskets carried by tangential extractors, the capacity of tangential extractors is increased and the efficiency of the honey extraction process is likewise increased. Thus, the focus of the present invention is on maximizing the frame capacity of tangential extractors through the provision of multi-layer honeycomb basket assemblies in which two or more honeycomb baskets are positioned in substantial alignment with each other. It has been found that the capacity of tangential extractors can be increased to double, triple, or even quadruple their prior art capacity by either incorporating multi-layer honeycomb basket assemblies into their design or providing additional honeycomb baskets substantially aligned with the typically provided honeycomb baskets (*i*.*e*., by providing or retrofitting multi-layer honeycomb baskets)and, when necessary, by increasing the diameter of the outer housing of the extractor.

In general, the present invention provides a tangential extractor for extracting honey from a honeycomb including a multi-layer honeycomb basket assembly. The multi-layer honeycomb basket assembly includes a first honeycomb basket having an interior for retaining a honeycomb and a second honeycomb basket having an interior for retaining a honeycomb. The second honeycomb basket is substantially aligned with the first honeycomb basket and a gap is provided between the first and second honeycomb baskets. A barrier is positioned between the interior of the first honeycomb basket and the interior of the second honeycomb basket.

### BRIEF DESCRIPTION OF THE DRAWINGS

Fig. 1 is a top plan representation of a prior art single-layer non-reversible tangential extractor having a capacity for six honeycomb frames;
Fig. 2 is a top plan representation of a prior art single-layer reversible tangential extractor having capacity for six honeycomb frames;
Fig. 3 is a top plan representation of a prior art single-layer central-pivot reversing tangential extractor having a capacity for eight honeycomb frames;
Fig. 4 is a perspective view of a basket in a prior art single-layer central-pivot reversing extractor;
Fig. 5 is a top plan representation of two exemplary designs for a non-reversible multi-layer tangential extractor according to the present invention;
Fig. 6 is a perspective view of a preferred embodiment of a multi-layer honeycomb basket assembly for a non-reversible multi-layer tangential extractor according to the present invention;
Fig. 7 is a perspective view showing a preferred embodiment for retrofitting a multi-layer honeycomb basket assembly to a non-reversible tangential extractor;
Fig. 8 is a top plan representation of a reversible multi-layer tangential extractor showing three exemplary designs according to the present invention;
Fig. 9 is a perspective view of a preferred embodiment of a multi-layer honeycomb basket assembly in a reversible tangential or semi-tangential extractor;
Fig. 10 is a perspective view of a preferred embodiment of a multi-layer honeycomb basket assembly in a reversible tangential or semi-tangential extractor;
Fig. 11 is a top plan representation of a reversible multi-layer semi-tangential extractor showing three exemplary designs according to the present invention in counter-clockwise rotation;
Fig. 12 is a perspective view of a preferred embodiment of a multi-layer honeycomb basket assembly in a reversible semi-radial extractor;
Fig. 13 is a top plan representation of a central-pivot reversing multi-layer tangential extractor showing various alternative designs according to the present invention; and
Fig. 14 is a perspective view of a preferred embodiment of a multi-layer honeycomb basket assembly for a central-pivot reversing tangential extractor.

### PREFERRED EMBODIMENT FOR CARRYING OUT THE INVENTION

As mentioned herein above, the present invention focuses on increasing the capacity of tangential extractors by incorporating multi-layer honeycomb basket assemblies into their various designs -- non-reversible, reversible, and central-pivot reversing. Herein, an exemplary means for retrofitting multi-layer honeycomb baskets to existing tangential extractors is also disclosed; however, the present invention is not to be limited to such retrofit designs. Retrofitting is achieved by adding one or more layers of honeycomb baskets adjacent to and substantially aligned with the already available baskets in tangential extractors so that nearly all features and mechanical components of tangential extractors will be applied equally to the new design.

Non-reversible tangential extractors of the prior art have been discussed herein above with reference to Fig. 1.

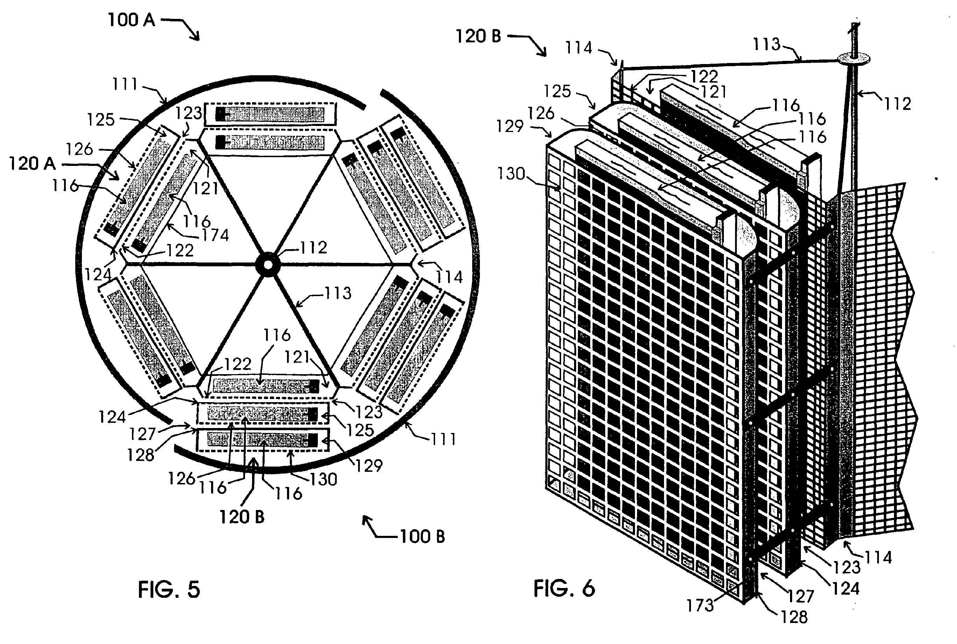

Referring now to Fig. 5, two exemplary designs (two-layer and three-layer) for a non-reversible multi-layer tangential extractor according, to the present invention are shown and designated generally by the numerals 100A and 100B. As with prior art non-reversible single-layer tangential extractors, non-reversible multi-layer tangential extractors 100A, 100B have a central drive shaft 112 connected to braces 113 that connect to a wing support 114. Central drive shaft 112 is connected to any suitable drive means (not shown) for effecting rotation of central drive shaft 112, braces 113, and wing support 114. The improvement of the present invention lies in replacing the prior art singular honeycomb baskets, such as honeycomb baskets 15 of the prior art non-reversible tangential extractor 10, with multi-layer honeycomb basket assemblies such as two-layer honeycomb baskets 120A or three-layer honeycomb baskets 120B, as shown in Fig. 5.

The design of multi-layer honeycomb basket assembly 120A for use in a non-reversible tangential extractor is generally represented in Fig. 5. Therein, it can be seen that a first honeycomb basket 121 is mounted to wing support 114 and provides a screen 122. A second honeycomb basket 125 is positioned in front of honeycomb basket 121 and, more particularly, screen 122 of honeycomb basket 121, in substantial alignment therewith so as to produce concentric, adjacent honeycomb baskets 121, 125 and thereby provide a two-layer honeycomb basket assembly 120A. For purposes of the present disclosure, first honeycomb basket 121 can be considered an inner honeycomb basket, and second honeycomb basket 125 can be considered an outer honeycomb basket. Having thus far particularly disclosed the two-layer honeycomb basket assembly 120A of multi-layer tangential extractor 100A, such a two-layer design will be more fully considered herein below. It should be appreciated that the three-layer honeycomb basket assembly of multi-layer tangential extractor 100B will thereafter be disclosed with the understanding that like parts in the three-layer design are substantially as disclosed with respect to the two-layer design.

Notably, the first honeycomb basket 121 is shown as being a prior art honeycomb basket 15, as shown in Fig. 1; however, the present invention should not be limited to such a design. To ensure that honey is not thrown from the honeycomb frame 116 retained within the interior of honeycomb basket 121 into the honeycomb frame 116 retained within the interior of second honeycomb basket 125, a barrier 124 is provided between the first honeycomb basket 121 and second honeycomb basket 125. Barrier 124 changes the direction of honey being thrown from the honeycomb frame 116 in the first honeycomb basket 121 to flow around the honeycomb frame 116 retained within second honeycomb basket 125 to reach the internal surface of outer housing 111, where the honey drips down and accumulates in the bottom to be removed by a suitable outlet.

It should be appreciated that the first honeycomb basket 121, shown in Fig. 5, requires no barrier 124 inasmuch as there is not occasion for honey to impinge upon the honeycomb frame 116 retained in the first honeycomb basket 121. However, a barrier 124 is required between each adjacent honeycomb basket 121, 125. As shown in Fig. 5, for non-reversible tangential extractors 100, barrier 124 can be provided as forming a part of second honeycomb basket 125.

Second honeycomb basket 125 defines an interior between barrier 124 and screen 126. For purposes of the present disclosure, and especially interpreting the claims herein, it is to be understood that the first honeycomb basket 121 also defines an interior inasmuch as it can retain a honeycomb frame 116. Additionally, the wing support design of the first honeycomb basket 121, which is existent in the prior art, is to be considered a "honeycomb basket" for purposes of the present disclosure and interpretation of the claims. Of course, the first honeycomb basket 121 could be provided with a barrier, such as barrier 174, if such is desired.

Despite the fact that barrier 124 is discussed herein above as forming a portion of second honeycomb basket 125, barrier 124 need not take such a form. Indeed, it is only necessary that second honeycomb basket 125 is able to retain a honeycomb frame 116, and this retention does not mean that honeycomb frame 116 must be enclosed in a typical basket-like structure. Rather, a suitable second honeycomb basket 125 will retain a honeycomb frame 116 adjacent to and substantially aligned with a honeycomb frame 116 held within the first honeycomb basket 121, and barrier 124 is to be provided there between (*i*.*e*. between adjacent honeycomb frames 116) whether or not barrier 124 can properly be considered to form part of second honeycomb frame 125. It should be readily appreciated that honeycomb baskets 121, 125 are positioned so as to provide a gap 123 between their respectively retained honeycomb frames 116, and a barrier 124 is provided in that gap.

Gap 123, provided between adjacent honeycomb frames 116 within multi-layer honeycomb basket assemblies 120, is preferably about 0.3 inches, although the present invention is not limited thereto or thereby. That is, the distance between the interior of first honeycomb basket 121 and barrier 124, in a non-reversible multi-layer tangential extractor 100A, 100B is preferably 0.3 inches. This dimension was experimentally determined to be more than large enough according to the quantity of honey typically thrown from one side of a honeycomb frame. Those of ordinary skill in the art will readily be able to determine a useful and functional gap length for a given application.

Non-reversible multi-layer tangential extractor 100B is next considered. As with two-layer honeycomb basket assembly 120A of non-reversible multi-layer tangential extractor 100A, three-layer honeycomb basket assembly 120B of non-reversible multi-layer tangential extractor 100B includes first honeycomb basket 121 and second honeycomb basket 125. Honeycomb baskets 121, 125 hold honeycomb frames 116 separated by gap 123, with barrier 124 therein. As mentioned, these parts exist substantially as disclosed with respect to two-layer honeycomb basket assembly 120A. Non-reversible multi-layer tangential extractors 100A and 100B differ primarily in the number of honeycomb baskets that they provide in a multi-layer honeycomb basket assembly, and, as a direct result of the size of the multi-layer honeycomb basket assemblies, they also differ in the diameter of their housing 111.

Thus, continuing, three-layer honeycomb basket assembly 120B further includes third honeycomb basket 129, substantially identical to second honeycomb basket 125 in structure and alignment, as can plainly be seen in Fig. 5. Third honeycomb basket 129 retains a honeycomb frame 116, and provides a screen 130 and a barrier 128, which, as discussed above, may or may not form a portion of third honeycomb basket 129. Barrier 128 is positioned between the interior of second honeycomb basket 125 and the interior of third honeycomb basket 129 in gap 127.

To facilitate a better understanding of the present invention, a perspective view of a multi-layer honeycomb basket 120B is provided in Fig. 6. Again, it should be stressed that, although barriers 124, 128 are depicted as forming a portion of honeycomb baskets 125, 129, respectively, barriers 124, 128 need not form a part of the honeycomb baskets 125, 129 with which they are associated. Additionally, it should also be noted that the first honeycomb basket 121 is considered a honeycomb basket for purposes of the present disclosure, despite its unenclosed structure. Finally, screens 122, 126, 130 are merely preferred embodiments for a boundary structure that will retain honeycombs or honeycomb frames 116 against centrifugal forces and yet allow honey to be forced from honeycomb frames 116. Thus, it should be readily appreciated that a structural or functional equivalent of such screens may alternatively be employed.

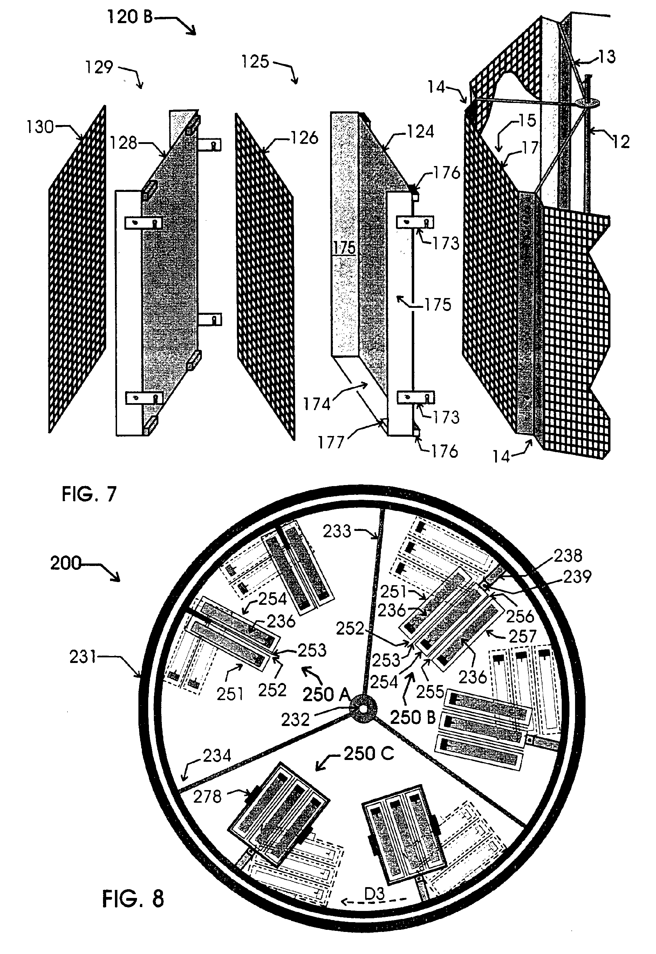

Realizing that it may be more economical to convert prior art non-reversible tangential extractors, such as those in Fig. 1, into multi-layer tangential extractors of the present invention, such as those shown in Figs. 5, a multi-layer honeycomb basket structure for retrofitting to a prior art non-reversible tangential extractor is disclosed with reference to Fig. 7. In a preferred embodiment for retrofitting, barrier 124 is hung upon the already available honeycomb baskets 15 by a flange 173 affixed to wing support 14 by screws (not shown) or other suitable fasteners.. Barrier 124 also includes a bottom support 174 upon which a honeycomb frame 116 may rest, and provides sidewalls 175. Barrier 124, flange 173, bottom surface 174, and sides 175 may be constructed from stainless steel or other metals, although the present invention is not to be limited thereto or thereby. Screen 126 forms the other side of second honeycomb basket 125. Spacer 176 ensures that a gap exists between barrier 124 and screen 17 of first honeycomb basket 15. A hole 177 may be provided to help retain honeycomb frame 116, as is generally known in the art.

Additional honeycomb baskets, such as third honeycomb basket 129, including barrier 128 and screen 130, may likewise be hung from screen 126 of second honeycomb basket 125. Thus, while Fig. 7 shows an exemplary retrofit concept for providing a three-layer multi-layer honeycomb basket 120B, it should be appreciated that a greater or lesser number of additional honeycomb baskets may be provided and yet fall within the scope of the present invention.

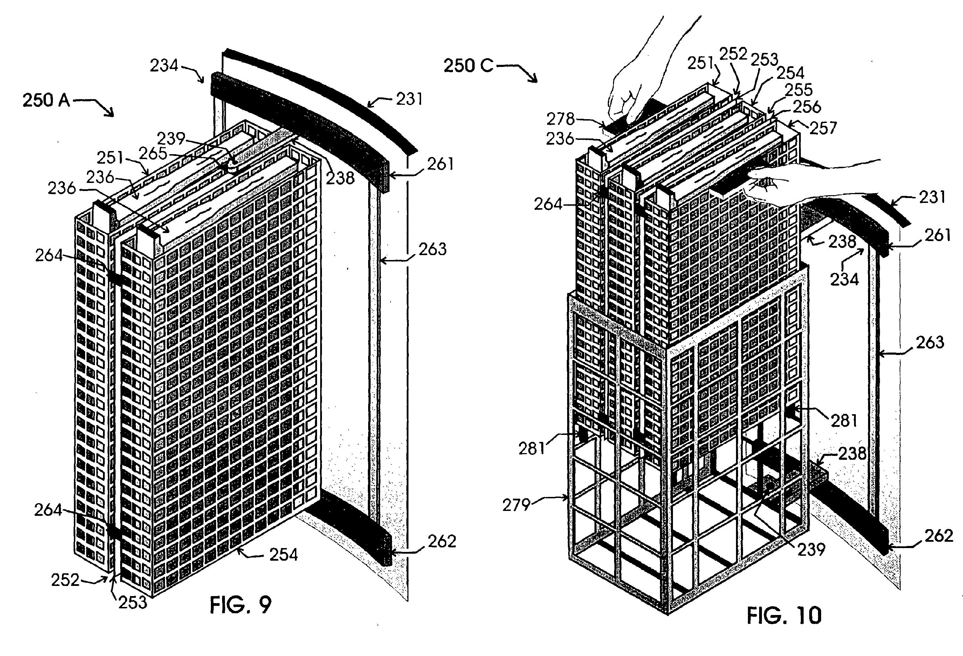

The principals of the present invention are also applicable for use with reversible tangential extractors, such as that shown in Fig. 2. With reference to Fig. 8, it can be seen that a top plan view of three alternate designs for multi-layer honeycomb basket assemblies for reversible tangential extractors according to the present invention are designated generally by the numeral 200. Notably, Fig. 8 does not depict a single design for an entire multi-layer reversible tangential extractor, but rather shows three alternative designs, in three separate sections, which should be considered individually, it being readily appreciated that a given design for multi-layer honeycomb basket assemblies, whether design 250A, 250B, or 250C, would most likely be employed as the only basket assembly design in a given reversible multi-layer tangential extractor. Fig. 8 has been provided in this manner in order that three alternative designs for a reversible multi-layer tangential extractor could be represented in one figure.

As with prior art reversible single-layer tangential extractors, reversible multi-layer tangential extractor 200 has a central drive shaft 232 connected to braces 233 that connect to a wing support 234. Drive shaft 232 is connected to any suitable drive means (not shown) for effecting rotation of drive shaft 232, braces 233, and wing support 234. The improvement of the present invention lies in replacing the prior art honeycomb baskets, such as honeycomb baskets 35 of the prior art reversible tangential extractor 30, with multi-layer honeycomb basket assemblies, such as two-layer honeycomb basket assemblies 250A or three-layer honeycomb basket assemblies 250B or 250C, as shown in Fig. 8.

The design of a two-layer honeycomb basket assembly 250A for use in a reversible tangential extractor is generally represented in Fig. 8. Therein, it can be seen that a first honeycomb basket 251, retaining a honeycomb frame 236 within its interior, and a second honeycomb basket 254, retaining a honeycomb frame 236 within its interior, are positioned in substantial alignment with a gap 252 between their respective interiors. A barrier 253 is disposed in gap 252 between the respective interiors of baskets 251, 254. Similar to gap 123 and barrier 124 of multi-layer honeycomb basket 120A and 120B above, barrier 253 is preferably distanced from both the interior of first honeycomb basket 251 and the interior of second honeycomb basket 254 by about 0.3 inches, although such recitation is to be non-limiting. Two-layer honeycomb basket 250A is pivotally connected to wing support 234 by a support 238 and hinge 239. Hinge 239 gives the two-layer honeycomb basket 250A the ability to change its position freely according to the direction of rotation of drive shaft 232, as described herein above with respect to prior art reversible tangential extractor 30 of Fig. 2. Having thus far particularly disclosed the two-layer honeycomb basket assembly 250A of reversible multi-layer tangential extractor 200, such a two-layer design will be more fully considered herein below. It should be appreciated that the three-layer honeycomb basket assemblies 250B and 250C, as non-limiting alternatives for use in reversible multi-layer tangential extractor 200, will thereafter be disclosed with the understanding that like parts in the three-layer designs are substantially as disclosed with respect to the two-layer design.

Fig. 9 shows a perspective view of a preferred embodiment of a two-layer honeycomb basket assembly 250A. Therein, it can be seen that first honeycomb basket 251 and second honeycomb basket 254 are preferably screen cages retaining honeycomb frames 236. The caged designed is preferred, because it is a simple construction having two major screened walls that allow for the extraction of honey from both sides of honeycomb frames 236. Notably, the positioning of barrier 253 between first honeycomb basket 251 and second honeycomb basket 254 ensures that, during operation of reversible two-layer tangential extractor 200, honey will be thrown out of honeycomb frames 236 and around adjacent honeycomb frames 236 to contact and be collected by outer housing 231.

In Fig. 9, it can be seen that wing support 234 may be circular instead of polygonal in shape. Therefore, wing support 234, as shown in Fig. 9, preferably includes a top ring support 261 and bottom ring support 262 connected by vertical supports 263 that provide rigidity to the revolving wing support 234. Two-layer honeycomb basket assembly 250A is carried on the inner side of the supports 261, 262 of wing support 234 by two hinged supports, atop support 238 extending from ring support 261 and having a hinge 239, and a bottom support (not shown) extending from ring support 262 and having a hinge (not shown). In the preferred embodiment of Fig. 9, first honeycomb basket 251 and second honeycomb basket 254 are connected by suitable spacers 264, at the sides thereof, and spacers 265 at the top and bottom (not shown) thereof. Notably, top hinge 239 and bottom hinge (not shown) connect to top and bottom spacers 265, respectively (bottom spacer not shown).

The alternative three-layer honeycomb basket assembly 250B is next considered. As with two-layer honeycomb basket assembly 250A of reversible multi-layer tangential extractor 200, three-layer honeycomb basket assembly 250B of reversible multi-layer tangential extractor 200 includes first honeycomb basket 251 and second honeycomb basket 254, which hold honeycomb frames 236 separated by gap 252, with barrier 253 therein. Furthermore, three-layer honeycomb basket assembly 250B includes side spacers, top and bottom spacers, top and bottom supports 238, and top and bottom hinges 239. As mentioned, these parts exist substantially as disclosed with respect to two-layer honeycomb basket assembly 250A. However, as can be generally seen in Fig. 8, at assembly 250B, top and bottom hinges 239 do not connect to top and bottom spacers because a more symmetrical attachment is desired. Thus, top and bottom hinges 239 preferably connect to "middle" or second honeycomb basket 254 in a suitable manner.

Continuing, three-layer honeycomb basket assembly 250B further includes third honeycomb basket 257, substantially identical to second honeycomb basket 254 in structure and alignment, as can plainly be seen in Fig. 8. Thus, third honeycomb basket 257, retaining a honeycomb frame 236 within its interior, and second honeycomb basket 254, retaining a honeycomb frame 236 within its interior, are positioned in substantial alignment with a gap 255 between their respective interiors. A barrier 256 is disposed in gap 255 as has been disclosed with respect to other embodiments.

The alternative design of three-layer honeycomb basket assembly 250C is somewhat different. With reference to Fig. 10 in can be seen that assembly 250C is in many respects identical to assembly 250B, with like parts receiving the same numerals. However, three-layer honeycomb basket assembly 250C includes a cage 279 that serves to support the three honeycomb baskets 251, 254, 257, and connect them to wing support 234. Thus, in this alternative design, top and bottom supports 238 and top and bottom hinges 239 are not connected to the top and bottom spacers, but rather are connected to cage 279. Multiple layers of honeycomb baskets, such as honeycomb baskets 251, 254, 257, can be loaded and unloaded from cage 279 by suitable handles 278. Legs 281 may also be provided to allow the multiple honeycomb baskets 251, 254, 257 to be set on the ground, for example, when unloading a set of baskets 251, 254, 257, having empty honeycomb frames 236 therein, and replacing them with a new set of baskets.

It should be readily appreciated that the cage design of a multi-layer honeycomb basket assembly may be provided for retaining any practical number of honeycomb baskets. Typically, it is envisioned that from two to four honeycomb baskets will be employed in such an embodiment. Indeed, from two to four honeycomb baskets are envisioned as being practical for use in any of the multi-layer honeycomb basket assembly embodiments disclosed herein. Of course, a greater number of baskets may be employed, and the present invention is not to be so limited.

As can be seen in phantom in Fig. 8, rotation of drive shaft 232 in direction D3 causes honeycomb basket assemblies 250A, 250B, 250C to rotate to a position from which honey is readily extracted from honeycomb frames 236. Rotation of drive shaft 232 in the direction opposite direction D3 will cause honeycomb basket assemblies 250A, 250B, 250C to lie in a position opposite that shown in phantom, and honey would then be extracted from the other side of honeycomb frames 236. Again, it will be noted that Fig. 8 displays three alternative designs for a reversible multi-layer tangential extractor 200, and that a given design for multi-layer honeycomb basket assemblies, whether design 250A, 250B, or 250C, would most likely be employed as the only basket assembly design in a given reversible multi-layer tangential extractor.

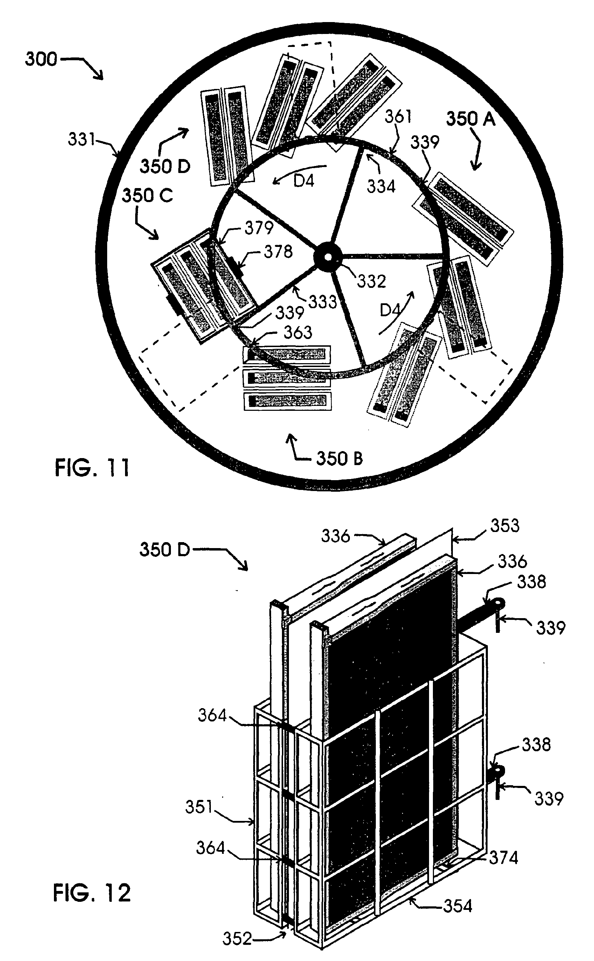

Notably, it has been found that the design of reversible extractors, such as those shown in Fig. 2 can be modified to provide what is termed herein a "reversible semi-tangential" or "semi-radial" extractor. Referring now to Fig. 11, it can be seen that a reversible semi-tangential extractor is designated therein by the numeral 300. Comparing reversible semi-tangential extractor 300 to reversible tangential extractor 200 of Fig. 8, it can be seen that the design of the former is obtained by replacing wing support 234 of reversible tangential extractor 200 with a smaller wing support 334 and attaching to wing support 334 multi-layer honeycomb basket assemblies, such as two-layer honeycomb basket assemblies 350A, 350D or three-layer honeycomb basket assemblies 350B, 350C, on the outer side (as opposed to the inner side) of wing support 334, on a hinge 339, like hinge 239.

It should be readily understood that two-layer honeycomb basket assembly 350A, aside from its orientation in connection to wing support 334, may be identical to multi-layer honeycomb basket assembly 250A disclosed for use with a typical reversible tangential extractor. Likewise, assembly 350B and 350C may be identical to multi-layer honeycomb basket assemblies 250B and 250C respectively. Assembly 350C provides a cage 379 and baskets having handles 378, like cage 279 and handles 278. Thus, reference may be made to Figs. 9 and 10, and the discussion above relating thereto, for an understanding of much of a preferred embodiment for multi-layer honeycomb basket assemblies 350A, 350B, 350C.

Honeycomb basket assemblies 350D of Fig. 11 are particularly suited for semi-radial extractors, and have a somewhat unique design, as can be more clearly seen in Fig. 12. Therein, it can be seen that honeycomb frames 336 are retained in first and second baskets 351, 354, respectively. Notably, the baskets 351, 354 are somewhat different from the baskets of previously disclosed embodiments. Baskets 351, 354 have a wide-mesh design, and are sized shorter than the honeycomb frames 336, which they hold. Such a design is allowed because there are negligible transverse forces on the sides of the honeycomb frames 336, during rotation, such that the baskets 351, 354 serve merely as suitable guides to hold the end bars of frames 336 in place. The negligible transverse forces are a result of the spacing of honeycomb basket assemblies 350D, as shown in Fig. 11, wherein honeycomb basket assemblies 350D are placed so close together that there is only a small angle of inclination during rotation of wing support 334. Due to this small angle of inclination, there is no danger for breakage of the honeycombs and, thus, there is no need for baskets 351, 354 to completely and securely hold honeycomb frames 336, as preferable in previous embodiments.

Honeycomb basket assembly 350D is therefore yet another embodiment of a useful honeycomb basket assembly according to the present invention. Particularly, honeycomb basket assembly 350D includes first and second baskets 351, 354 connected by spacers 364, providing a gap 352 having a barrier 353 therein. Frame supports 374 form the structural bottom baskets 351, 354 upon which honeycomb frames 336 may rest. Supports 338 and hinges 339 are employed to pivotally connect honeycomb basket assembly 352 wing support 334 substantially as mentioned with respect to previous embodiments.

As can be seen in Fig. 11, during rotation of drive shaft 332, braces 333, and wing support 334 in the counter-clockwise direction D4, the position of multi-layer honeycomb basket assemblies 350A, 350B, 350C , 350D changes to a semi-tangential state or semi-radial state according to the number of multi-layer honeycomb basket assemblies 350A, 350B, 350C, 350D carried by wing support 334. The phantom lines in Fig. 11 represent the positions from which honeycomb frames 336 may be loaded or unloaded from assemblies 350A, 350B, 350C, 350D.

Two-layer honeycomb basket assemblies 350A, 350D may simply be permitted to pivot until they contact a neighboring honeycomb basket assembly 350A, 350D and, from this semi-tangential or semi-radial position, honey may be extracted from one side of honeycomb frames 336 substantially as in other tangential extractors as discussed herein above. It should be readily apparent that rotation in the clockwise direction would allow for the extraction of honey from the other side of honeycomb frames 336.

In reversible semi-tangential extractors 300, it is not necessary that multi-layer honeycomb baskets assemblies 350A, 350B, 350C contact each other during rotation of wing support 334. Alternatively, honeycomb basket assemblies 350A, 350B, 350C maybe adequately spaced one from the other so as to pivot during rotation to lie in a position tangential to the direction of rotation of wing support 334. This design is depicted in Fig. 11, at assemblies 350B and 350C. Optionally, a vertical support, such as represented in Fig. 11 at numeral 363, could be provided, for assemblies 350A, 350B, 350C to contact for support.

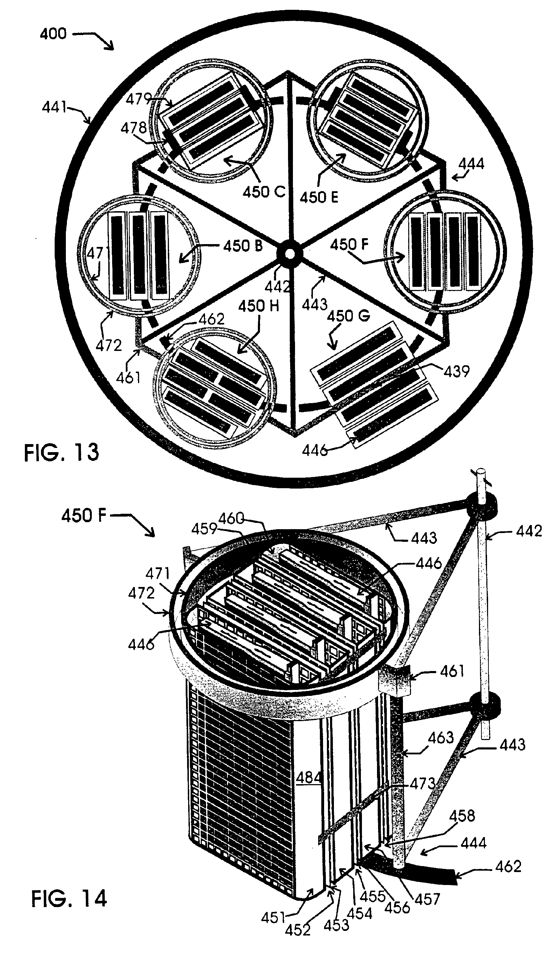

The multi-layer concept of the present invention can also be applied successfully to maximize the frame capacity of central-pivot reversing tangential extractors such as that which is generally represented in Fig. 3. As with the non-reversible and reversible tangential extractor and reversible semi-tangential extractor embodiments disclosed above, multiple embodiments for a central-pivot reversing tangential extractor are shown in a single figure. Referring now to Fig. 13, six different potential embodiments for multi-layer honeycomb basket assemblies are shown and labeled 450B, 450C, 450E, 450F, 450G, and 450H.

As with prior art central-pivot reversing single-layer tangential extractors, central-pivot reversing multi-layer tangential extractors 400 have a drive shaft 442 connected to braces 443 that connect to a wing support 444. Drive shaft 442 is connected to any suitable drive means (not shown) for effecting rotation of drive shaft 442, braces 443, and wing support 444. The improvement of the present invention lies in replacing the prior art single honeycomb baskets, such as honeycomb baskets 45 of tangential extractor 40 of Fig. 3, with multi-layer honeycomb basket assemblies, such as any of assemblies 450B, 450C, 450E, 450F, 450G, or 450H, as shown in Fig. 13.

The design of a three-layer honeycomb basket assembly 450B for use in a central-pivot reversing tangential extractor is generally represented in Fig. 13. Notably, details of three-layer honeycomb basket assembly 450B are substantially the same as that described for three-layer honeycomb basket assemblies 250B and 350B as shown in Figs. 8 and 11 and discussed in relation thereto. However, honeycomb basket assembly 450B is stabilized at its top by internal support ring 471, connected to the exterior baskets, and external support ring 472, which forms a part of wing support 444. Similar to the prior art central-pivot reversing tangential extractors as shown in Fig. 3, basket assembly 450B is pivotally connected to the bottom portion of wing support 444 by a bottom hinge (not shown, see Fig. 4).

The three-layer honeycomb basket assembly design shown at 450C is substantially the same as that described for three-layer honeycomb basket assembly 250C as shown in Figs. 8 and 10 and discussed in relation thereto, and includes cage 479 and suitable handles 478. Assembly 450C also differs from assembly 250C in that it is supported at its top by an internal support ring 471 in cooperation with external support ring 472, and differs in that it is pivotally connected to the bottom portion of wing support 444 by a bottom hinge (not shown) as are prior art baskets 45 of Figs. 3 and 4.

The four-layer honeycomb basket assembly design shown at 450E is substantially identical to the three-layer design of 450C, but includes a fourth basket. Considering the extent of disclosure herein above regarding the provision of two- and three-layer honeycomb basket assemblies, the addition of a fourth honeycomb basket is deemed to be readily apparent to those of ordinary skill in the art.

The four-layer honeycomb basket assembly design shown at 450F is substantially identical to the three-layer design of 450B, but includes a fourth basket. Reference can be made to Fig. 14, wherein assembly 450F, and its relation to portions of a central-pivot reversing tangential extractor 400 is more particularly shown.

Therein, it can be seen that four-layer honeycomb basket assembly 450F includes first honeycomb basket 451, separated from second honeycomb basket 454 by gap 452, containing barrier 453. Second honeycomb basket 454 is likewise separated from third honeycomb basket 457 by gap 455, containing barrier 456. Third honeycomb basket 457 is separated from fourth honeycomb basket 460 by gap 458, containing barrier 459. The baskets 451, 454, 457, 460 retain honeycomb frames 446 and are connected by top and bottom spacers 473. An internal support ring 471 is connected to exterior baskets 451 and 460, and cooperates with external support ring 472, which forms a portion of wing support 444, so as to stabilize the baskets of basket assembly 450F. Similar to the prior art central-pivot reversing tangential extractors as shown in Figs. 3 and 4, basket assembly 450F is pivotally connected to the bottom portion of wing support 444 by a bottom hinge (not shown, see Fig. 4). Assemblies 450B, 450C, 450E, and 450H pivot and are stabilized on wing support 444 in the same manner. Wing support 444 is substantially like wing support 234 of Figs. 9 and 10, having a top support 461, bottom support 462, and vertical supports 463, although top support 461 is adapted for external support rings 472.

The four-layer honeycomb basket assembly design shown at 450G shows a different connection to wing support 444. Assembly 450G is similar to assembly 450F in most respects, but differs in that it does not contain an internal support ring that communicates with an external support ring for stabilization. Rather, Wing support 444, at its top support 461, extends over four-layer honeycomb basket assembly 450G and attaches thereto by top hinge 439, substantially as it does at the bottom hinge (not shown, see Fig. 4). Notably, this design is less preferred because one must avoid implementing it in such a way that access to the interior of any basket is hindered.

Fig. 13 also shows an alternative embodiment of a multi-layer honeycomb basket assembly designated generally by the numeral 450H. Multi-layer honeycomb basket assembly 450H is substantially similar to multi-layer honeycomb basket assembly 450F, but, with respect to assembly 450H, it can be seen that second and third honeycomb baskets are sized slightly larger than first and fourth honeycomb baskets. The larger second and third honeycomb baskets are provided to retain two Shallow frames each, while the first and fourth honeycomb baskets each retain one St. Langstroth honeycomb frame. Shallow frames and St. Langstroth frames are believed to be generally known by those of ordinary skill in apiculture and related arts. Notwithstanding the forgoing, the present invention is not limited to any particular dimensions or size for any of the honeycomb baskets in any of the various types of extractors discussed herein above.

Central-pivot reversing multi-layer tangential extractor 400 operates substantially as discussed herein above with respect to prior art central-pivot reversing extractor 40. Thus, to extract a load of honey from honeycomb frames 446, drive shaft 442 is rotated to cause honey to be thrown from honeycomb frames 446. Thereafter, the multi-layer honeycomb basket assemblies, such as 450B, 450C, 450E, 450F, 450G, or 450H are rotated either manually or by suitable mechanical means so that honey may be extracted from the other side of honeycomb frames 446.

Although three- and four-layer honeycomb basket assemblies have been described for use in central-pivot reversing tangential extractors, it should be readily appreciated that the concepts of the present invention can also be applied to provide multi-layer honeycomb basket assemblies with a lesser or greater number of basket layers. From the teachings herein, those of ordinary skill in the art can readily accomplish such alterations of the specific designs disclosed.

The multi-layer concept of the present invention was applied to alter the design of common tangential extractors in order to increase their capacity. With reference to Table 1, it can be seen that, for a given diameter for an outer housing of a tangential extractor, the concepts of the present invention can be applied to substantially increase capacity. The first column of Table 1 describes the type of extractor in which the concepts of the present invention were applied. Column two provides the diameter, in inches, of the tangential extractor. Column three, for means of comparison, provides the number of frames commonly found in a prior art tangential extractor of the given type and diameter. Column four sets forth the number of frames incorporated into the design of the given tangential extractor through practice of the multi-layer concept of the present invention. Column five sets forth the percent increase in capacity for each type of extractor.

**TABLE 1:**

| PERCENTAGE INCREASES IN FRAME CAPACITY BY USING THE PRESENT INVENTION | | | | |
|---|---|---|---|---|
| **Type of Extractor** | **Diameter in Inches** | **Number of Frames in Common Tangential Extractors** | **Number of Frames in Multi-layer Tangential Extractors** | **Percentage of Increase in Capacity** |
| NON REVERSIBLE | 20 | 3 | 3X2=6 | 100% |
| | 21 | 4 | 3X2=6 | 50% |
| | 24 | 5 | 4X2=8 | 60% |
| | 26 | 6 | 5X2=10 | 67% |
| | 30 | 8 | 6X2=12 or | 50% |
| | | | 5X3=15 | 87% |
| | 36 | 10 | 6X3=18 or | 80% |
| | | | 5X4=20 | 100% |
| | 40 | ― | 6X4=24 | |
| REVERSIBLE | 28 | 4 | 3X2=6 | 50 |
| | 34 | 6 | 5X2=10 | 67% |
| | 40 | 8 | 7X2=14 | 75% |
| | 50 | 12 | 10X2=20 or | 67% |
| | | | 8X3=24 | 100% |
| CENTRAL-PIVOT REVERSIBLE | 44 | 8 | 6X3=18 | 125% |
| | 50 | ― | 7X4=28 | |
| SEMI-RADIAL | 30 | 12 | 8X2=16 | 33% |

Thus it should be evident that the device and methods of the present invention are highly effective in increasing the capacity of various types of tangential extractors. While in accordance with the patent statutes only the best mode for carrying out the concepts of the present invention has been provided in detail, the present invention is not to be limited thereto or thereby. Accordingly, the following claims shall serve to define the scope of the present invention.

## Claims

1. A multi-layer honey extractor for extracting honey from honeycombs comprising:
a multi-layer honeycomb basket assembly comprising:
a first honeycomb basket having an interior for retaining a honeycomb;
a second honeycomb basket having an interior for retaining a honeycomb, said second honeycomb basket being substantially aligned with said first honeycomb basket and providing a gap between said first and second honeycomb baskets; and
a barrier positioned between said interior of said first honeycomb basket and said interior of said second honeycomb basket.

2. The honey extractor according to claim 1, further comprising:
an outer housing; and
a drive shaft operatively connected to a drive means for rotation of said drive shaft, said first honeycomb basket and said second honeycomb basket being operatively connected to said drive shaft.

3. The honey extractor according to claim 2, further comprising:
a plurality of radially extending braces affixed to said drive shaft; and
a wing support mounted to said plurality of radially extending braces.

4. The honey extractor according to claim 3, wherein said first honeycomb basket is mounted to said wing support.

5. The honey extractor according to claim 4, wherein said first honeycomb basket is an inner honeycomb basket and said second honeycomb basket is an outer honeycomb basket said second honeycomb basket being concentric with said first honeycomb basket.

6. The honey extractor according to claim 5, wherein said barrier forms a portion of said outer honeycomb basket.

7. The honey extractor according to claim 6, wherein said outer honeycomb basket is removably mounted to said first honeycomb basket.

8. The honey extractor according to claim 6, said multi-layer honeycomb basket assembly further comprising:
a third honeycomb basket having an interior for retaining a honeycomb, said third honeycomb basket being substantially aligned with said second honeycomb basket and providing a gap between said second and said third honeycomb baskets; and
a second barrier positioned between said interior of said second honeycomb basket and said interior of said third honeycomb basket.

9. The honey extractor according to claim 3, wherein said multi-layer honeycomb basket assembly is pivotally connected to said wing support.

10. The honey extractor according to claim 9, wherein said first and second honeycomb baskets each have at least two screened walls.

11. The honey extractor according to claim 10, wherein said barrier is positioned in said gap.

12. The honey extractor according to claim 3, wherein said multi-layer honeycomb basket assembly further comprises:
a cage removably receiving said first and second honeycomb baskets, said cage being mounted to said wing support.

13. The honey extractor according to claim 12, wherein said multi-layer honeycomb basket assembly further comprises handles for removing said first and second honeycomb baskets from said cage.

14. A multi-layer honeycomb basket assembly comprising:
a first honeycomb basket having an interior for retaining a honeycomb;
a second honeycomb basket having an interior for retaining a honeycomb, said second honeycomb basket being substantially aligned with said first honeycomb basket;
a gap between said first and second honeycomb baskets; and
a barrier positioned between said interior of said first honeycomb basket and said interior of said second honeycomb basket.

15. A retrofit multi-layer honey extractor comprising:
a wing support that retains a plurality of honeycombs;
a plurality of honeycomb baskets having interiors for retaining a honeycomb; and
a gap between said plurality of honeycombs retained in said wing support and said plurality of honeycomb baskets, each of said plurality of honeycomb baskets being substantially aligned with one of said plurality of honeycombs retained in said wing support and having at least one screened wall and one solid wall, wherein said one solid wall defines a border of said gap.
